# EUROPEAN PATENT SPECIFICATION

(11) **EP 3 970 447 B1**
(45) Date of publication and mention of the grant of the patent: **05.03.2025**
(21) Application number: 19728669.3
(22) Date of filing: 04.06.2019
(51) Int. Cl.: H04W 76/14, H04L 47/70, H04W 28/18, H04W 40/22, H04W 28/02

(54) **NETWORK ENTITY, USER EQUIPMENTS AND METHODS FOR USING SIDELINK RESOURCES**
NETZERKGERÄT, BENUTZERGERÄT UND VERFAHREN FÜR DIE VERWENDUNG VON SIDELINK RESOURCEN
ENTITÉ DE RÉSEAU, ÉQUIPEMENT D'UTILISATEUR ET MÉTHODES POUR L'UTILISATION DE RESSOURCES POUR LIAISONS LATÉRALES

(43) Date of publication of application: 23.03.2022
(73) Proprietor: Huawei Technologies Co., Ltd., Longgang District Shenzhen, Guangdong 518129 (CN)
(72) Inventor: BOBAN, Mate, 80992 Munich (DE); WEBB, Matthew, William, 80992 Munich (DE); SAHIN, Taylan, 80992 Munich (DE)
(74) Representative: Roth, Sebastian
(86) International application number: PCT/EP2019/064448
(87) International publication number: WO 2020/244741

(56) References cited:
- US-A1- 2017 303 240
- US-A1- 2018 234 889
- US-A1- 2019 059 094
- "3rd Generation Partnership Project; Technical Specification Group Radio Access Network; NR; Study on NR Vehicle-to-Everything (V2X) (Release 16)", 3GPP STANDARD; TECHNICAL REPORT; 3GPP TR 38.885, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V16.0.0, 28 March 2019 (2019-03-28), pages 1 - 122, XP051723188
- ERICSSON: "Sidelink Resource Allocation in V2X", vol. RAN WG2, no. Malta; 20160215 - 20160219, 14 February 2016 (2016-02-14), XP051055404, Retrieved from the Internet <URL:http://www.3gpp.org/ftp/Meetings_3GPP_SYNC/RAN2/Docs/> [retrieved on 20160214]
- AT&T: "Resource allocation mechanism", vol. RAN WG1, no. Taipei, Taiwan; 20190121 - 20190125, 20 January 2019 (2019-01-20), XP051593358, Retrieved from the Internet <URL:http://www.3gpp.org/ftp/Meetings%5F3GPP%5FSYNC/RAN1/Docs/R1%2D1900445%2Ezip> [retrieved on 20190120]

## Description

### TECHNICAL FIELD

The present invention relates generally to the field of wireless communications, and more particularly to sidelink resource utilization under intermittent coverage and control. To this end, the invention provides a network entity and a User Equipment (UE) for providing resources and/or resource configuration to one or more UEs for performing sidelink transmission. Moreover, the one or more UEs utilize the provided resources and/or resource configuration in case of an interruption of a communication over a link. This invention also presents the corresponding methods.

### BACKGROUND

Generally, the Fifth Generation (5G) New Radio (NR) supports the Sidelink (SL) resource allocation and control.

For example, the 5G New Radio Vehicle-to-Everything (NR V2X) communications (starting from 3GPP Release 16) the following are stated:
∘ Complementing the Long Term Evolution (LTE) V2X (starting from Rel. 14 and 15).
∘ Supporting the advanced V2X use cases, including:
   ▪ Vehicles platooning
   ▪ Extended sensors
   ▪ Advanced driving
   ▪ Remote driving
∘ The Study Item (SI) is completed, and the Work Item (WI) has begun in the 3GPP Rel. 16.
∘ It is feasible to support, for example:
   ▪ Unicast, group cast, broadcast operation in sidelink (SL) via PC5 interface.
   ▪ Coexistence between SL and other cellular transmissions in a carrier.
   ▪ In-coverage, partial coverage, and out-of-coverage operation.
   ▪ Cross-RAT control.

Moreover, the NR V2X SL resource allocation are described. For instance, several new resource allocation modes for vehicle-to-vehicle (V2V) communications are introduced, as follows:
∘ **Mode 1:** Base station (BS) schedules the SL resource(s) to be used by the user equipment (UE) for the SL transmission(s).
∘ **Mode 2:** a UE determines (i.e. BS does not schedule) the SL transmission resource(s) within the SL resources configured by the BS/network or pre-configured SL resources. In addition, several modes are introduced based on the mode 2 as follow:
   ▪ **Mode 2a:** UE autonomously selects SL resource for transmission.
   ▪ **Mode 2c:** UE is configured with NR configured grant (Type-1 like) for SL transmission.
   ▪ **Mode 2d:** UE schedules SL transmissions of other UEs.
   ▪ **Mode 2b:** UE assists SL resource selection for other UE(s), a functionality which can be part of a), c), d).

Resource allocation Mode 1 and Mode 2 can be configured at the same time for the UE.

For NR V2X SL **Mode 1** the following techniques are supported:
▪ Dynamic resource allocation
▪ Configured grant Type 1 and Type 2

For NR V2X SL **Mode** 2 the following techniques are supported:
▪ Sensing and resource (re-)selection procedures
▪ Reservation of SL resources at least for blind retransmission

For **Mode 2a:** *sensing and resource selection* in a semi-persistent manner.

For **Mode 2c:** single or multiple SL *transmission patterns* on each SL resource pool, (pre-)configured by gNB.

For **Mode 2d:** gNB provides individual *resource pool configurations and*/*or individual resource configurations* to each group member UE (M-UE) *through another UE (S-UE).*

Detailed Mode 2d agreement: in the context of group-based SL communication, it is supported for UE-A to inform its serving gNB about members UE-B, UE-C, and so on of a group, and for the gNB to provide individual resource pool configurations and/or individual resource configurations to each group member through UE-A. UE-A cannot modify the configurations, and there is no direct connection required between any member UE and the gNB. Higher-layer only signalling is used to provide the configurations. Such functionality is up to UE capability (ies)."

NR Uu control on NR SL:
∘ RRC
   ▪ Acquisition of V2X-specific SIB(s)
   ▪ Establishment of RRC connection
   ▪ Configuration of resource allocation modes
      - Mode 1 and 2 can be configured at the same time for the UE
      - Network can provide pools of resources in which UE selects autonomously SL grant for SL uni-/group-/broadcast, via broadcast system information and/or dedicated signaling.
      - Mode 2 resource configuration can be provided for a given validity area.
   ▪ Mobility management
      - During handover, the transmission and reception of V2X SL communication are performed based on at least configuration of the exceptional transmission resource pool and reception resource pool of the target cell.
      - Cell reselection
   ▪ Reporting of UE SL information, SL-related measurement, information for traffic pattern(s).
∘ MAC
   ▪ Scheduling Request
   ▪ SL Buffer Status Reporting
• LTE Uu control on NR SL
   ∘ LTE can provide *semi-static configurations* for NR SL Mode 1 and Mode 2.
   ∘ For Mode 1, the configuration is of a Type 1 configured grant:
      ▪ Configuration limited to time-frequency resources and periodicity.
      ▪ Without additional functions or procedures on the LTE Uu interface.

The interruption of vehicle-to-everything sidelink (V2X SL) may be, for example, the vehicle-to-vehicle (V2V) transmissions and receptions, due to intermittent or limited coverage and/or control on the SL resources utilized by the vehicular network entities. Some examples include:
∘ Interruption of radio resource control (RRC) connection between the vehicular user equipment (UE) and the base station (BS) in cellular network-controlled V2V communications, including
   ▪ radio link failure,
   ▪ handover failure,
   ▪ cell (re-)selection failure,
   ▪ under any SL mode of operation in terms of radio resource allocation.
∘ Interruption of RRC connection between two or more vehicular UEs on V2V communications where a UE is involved in the control of resources for SL communications.
∘ Intermittent and limited coverage or control conditions among the vehicular network entities exist during early stages of the V2X network deployment, and also arise due to obstacles (e.g., a road tunnel, or wireless channel conditions limiting the connectivity) in any stage of network deployment, especially due to highly dynamic vehicular environment.
∘ Interruptions in V2V transmissions lead to degradation of communication performance, such as in terms of reliability and latency, which eventually negatively impacts the V2X use cases targeting safety and efficiency on the roads.

The V2V communications including the control of communication resources (e.g., resource configuration or allocation) among the network entities is supported by the 3GPP standard LTE-A Releases 14 and 15, as well as the upcoming standard NR (New Radio) Release 16.

Moreover, in terms of resource allocation for V2V communications, two modes of operation are defined in general. Using the Rel. 16 terminology, the two modes are called: Mode 1 where the resources are allocated by the network, i.e., BS, and Mode 2, where the UEs allocates the resources themselves autonomously. Accordingly, Mode 2 is suitable for V2V communications without any network coverage.

Furthermore, during the study phase of NR V2X by 3GPP, several sub-modes for Mode 2 were introduced. Among them, Mode 2d is defined to be the mode where the BS provides the resources to a group of UEs, through another UE.

In addition, interruption of the RRC connection on the Uu link (between UE and BS) are handled by the UEs operating Mode 1 or 2 as follows, according to the standard specifications:
∘ Mode 1 UEs leave any resources they are assigned, switch to a set of resources called "SL exceptional resources pool", and randomly select resources, until eventually switching to Mode 2 operation.
∘ Mode 2 UEs leave any resources they are assigned, and switch to pre-configured set of resources for out-of-coverage, or use the resource pools valid for an area.

However, the specified conventional method have the disadvantage that the different availability of resources for different modes as well as the random selection of resources could easily and negatively impact the SL communications, e.g., in terms of reliability and latency.

Moreover, the interruption of the RRC connection on the PC5 link (between UEs) under Mode 2d is not yet addressed in the standard specifications. The potential disadvantages are:
∘ both Uu and PC5 RRC connections could be interrupted
∘ behavior of the UEs upon interruption is not defined
∘ no fallback mode for Mode 2d is defined

All of these disadvantages would lead to a problem worse than that of Mode 1 or Mode 2 operation.

"3rd Generation Partnership Project; Technical Specification Group Radio Access Network; NR; Study on NR Vehicle-to-Everything (V2X) (Release 16)", 3GPP STANDARD; TECHNICAL REPORT; 3GPP TR 38.885, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, 28 March 2019, discloses at least two sidelink (SL) resource allocation modes, and how NR and LTE Uu interfaces are used to control/configure SL resource allocation. ERICSSON, "Sidelink Resource Allocation in V2X", vol. RAN WG2, no. Malta; 15 February 2016 - 19 February 2016, 14 February 2016, 3GPP DRAFT; R2-161566 - SIDELINK RESOURCE ALLOCATION IN V2X, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, discloses sidelink resource allocation in vehicle-to-everything (V2X) communication.

US 2017303240 A1 discloses a method for allocating radio resources to a transmitting terminal for performing direct communication transmission over a direct link connection.

US 2019059094 A1 discloses a wireless transmit receive unit (WTRU) that may switch from a first scheduling mode for device-to-device communication to a second scheduling mode for device-to-device communication in response to detecting that a radio link failure timer is running or has been started.

AT&T, "Resource allocation mechanism", vol. RAN WG1, no. Taipei, Taiwan; 21 January 2019 - 25 January 2019, 20 January 2019, 3GPP DRAFT; R1-1900445 RESOURCE ALLOCATION MECHANISM-V2, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, discloses resource allocation mechanisms.

### SUMMARY

In view of the above-mentioned problems and disadvantages, embodiments of the present invention aim to improve the conventional devices and methods. An objective is to provide a network entity and a UE that are less sensitive to interruptions of a communication link, in particular regarding sidelink transmissions. In particular, the network entity and UE should support utilization of resources and/or resource configuration for sidelink transmission even in case of an interruption of a communication over one or more links.

The objective of the present invention is achieved by the embodiments provided in the enclosed independent claims. Advantageous implementations of the embodiments are further defined in the dependent claims. In the following, parts of the description and drawings referring to embodiments not covered by the claims, are not part of the invention, but are illustrative examples necessary for understanding the invention.

In particular, embodiments of the invention propose a network entity and an UE that are able to continue transmitting/receiving on the SL, irrespective of any interruption of coverage and/or interruption of control in terms of radio resources, either by using their already existing SL communication resource and/or resource configuration, or by using a new SL communication resource and/or resource configuration, at least until a first threshold condition is met, for example, irrespective of the resource-allocation mode(s) they operate (e.g., Mode 1, Mode 2, Mode 2d, simultaneous modes, mode switching periods, etc.).

The main advantages of the embodiments of the invention can be summarized as follows:
- The SL transmissions and receptions will not be interrupted due to interruptions or changes in coverage and/or resource control.
- The uninterrupted SL transmissions/receptions would ensure stability of the QoS performance for the (advanced) V2X use cases.

A first aspect of the invention provides a network entity comprising a processor configured to determine a first threshold indicating the end of utilization, by one or more User Equipments, UEs, of one or more sidelink resources and/or sidelink resource configuration, for performing sidelink transmission, based on a probability value of a link interruption, wherein the network entity is configured to send the first threshold and the one or more sidelink resources and/or the sidelink resource configuration to the one or more UEs.

The network entity may be, for example, a BS, eNB (Evolved Node B), gNB (Next Generation Node B), RSU (Road Side Unit), UE, etc. In particular, the network entity (hereinafter also referred to as the BS) may determine the first threshold and provide it along with the resources and/or resource configuration.

The resources /configurations may be, e.g., pool, TFRP, etc., and may further be associated with an interruption, etc.

In some embodiments, the first threshold and the one or more sidelink resources and/or the sidelink resource configuration may be provided for an interruption of a communication over a link, such as intermittent coverage and control under PC5 and/or Uu RRC connection interruption.

The first threshold indicates the end of utilization. The end of utilization may be a time information, a distance information, a location information, etc.

In an implementation form of the first aspect, wherein the processor is further configured to determine a second threshold indicating the start of utilization, by the one or more UEs, of the one or more sidelink resources and/or the sidelink resource configuration for performing sidelink transmission, wherein the network entity is further configured to send the second threshold to the one or more UEs.

The second threshold may indicate the start of utilization. The start of utilization may be a time information, a distance information, a location information, etc. In some embodiments, the second threshold may be determined for an expected interruption of a communication over a link e.g., OOC.

In a further implementation form of the first aspect, the second threshold is indicative of an expected link interruption.

In a further implementation form of the first aspect, wherein the processor is further configured to determine the first threshold and/or the second threshold further based on one or more of:
- a time information indicating a start and/or an end of a link interruption,
- a distance information indicating a start and/or an end of a link interruption,
- a predefined location information of a link interruption,
- a duration of a link interruption,
- a frequency of a link interruption,
- a predefined area,
- received information from the one or more UEs and/or another network entity.

In a further implementation form of the first aspect, a link interruption includes one or more of:
- an interruption of a communication over a link between the network entity and a determined UE connected over at least one link to one or more UEs;
- an interruption of a communication over at least one link between the network entity and the one or more UEs;
- an interruption of a communication over the at least one link between the determined UE and the one or more UEs.

In particular, the determined UE may be, for example, a scheduling UE (S-UE). The one or more UEs may be member UEs (M-UEs).

In a further implementation form of the first aspect, the one or more sidelink resources and/or the sidelink resource configuration comprises at least one of:
- a configured grant,
- a dynamic grant,
- a time-frequency repetition pattern,
- a resource pool,
- a semi-persistent schedule,
- a one-shot schedule.

A second aspect of the invention provides a UE configured to determine one or more sidelink resources and/or sidelink resource configuration for one or more UEs for performing sidelink transmission; determine a first threshold indicating the end of utilization, by the one or more UEs, of the one or more sidelink resources and/or a sidelink resource configuration for sidelink transmission, based on a probability value of a link interruption; send, the one or more sidelink resources and/or the sidelink resource configuration to the one or more UEs, to be used in case of a link interruption; and send the first threshold to the one or more UEs and/or a network entity.

The UE may be an S-UE. In some embodiments, the S-UE may be at the same time an M-UE.

In some embodiments, the UE (e.g., the S-UE) may obtain the one or more sidelink resources and/or the sidelink resource configuration from the network entity, and may further forward them to the one or more UEs.

In some embodiments, a determined UE (e.g., an M-UE) may obtain the one or more sidelink resources and/or the sidelink resource configuration from another UE (e.g., an S-UE), and may further forward them to the one or more UEs.

In some embodiments, the one or more sidelink resources and/or the sidelink resource configuration may be provided for an interruption of a communication, under the PC5 and/or Uu the RRC connection interruption.

In an implementation form of the second aspect, a link interruption includes one or more of:
- an interruption of a communication over a link between the network entity and a determined UE connected over at least one link to one or more UEs;
- an interruption of a communication over at least one link between the network entity and the one or more UEs;
- an interruption of a communication over the at least one link between the determined UE and the one or more UEs.

The first threshold indicates the end of utilization. The end of utilization may be a time information, a distance information, a location information, etc.

In some embodiments, the first threshold that is determined by the UE (e.g., S-UE) may be different from the first threshold that is determined by the network entity.

In a further implementation form of the second aspect, the UE is further configured to determine a second threshold indicating the start of utilization, by the one or more UEs, of the one or more sidelink resources and/or the sidelink resource configuration for performing sidelink transmission; and send the second threshold to the one or more UEs and/or the network entity.

The second threshold may indicate the start of utilization. The start of utilization may be a time information, a distance information, a location information, etc.

In some embodiments, the second threshold that is determined by the UE (e.g., S-UE) may be different from the second threshold that is determined by the network entity.

In a further implementation form of the second aspect, the second threshold is indicative of a link interruption that is expected.

In a further implementation form of the second aspect, the UE is further configured to determine the first threshold and/or the second threshold further based on one or more of:
- a time information indicating a start and/or an end of a link interruption,
- a distance information indicating a start and/or an end of a link interruption,
- a predefined location information of a link interruption,
- a duration of a link interruption,
- a frequency of a link interruption,
- a predefined area,
- received information from the one or more UEs and/or another network entity.

In a further implementation form of the second aspect, the UE is further configured to indicate to the one or more UEs, a link interruption.

In a further implementation form of the second aspect, the one or more sidelink resources and/or the sidelink resource configuration comprises at least one of:
- a configured grant,
- a dynamic grant,
- a time-frequency repetition pattern,
- a resource pool,
- a semi-persistent schedule,
- a one-shot schedule.

In a further implementation form of the second aspect, the UE is further configured to obtain from the network entity and/or another UE (e.g., an S-UE), one or more of:
- the one or more sidelink resources and/or the sidelink resource configuration,
- the first threshold,
- the second threshold.

A fourth aspect of the invention provides a method for network entity, the method comprising determining a first threshold indicating the end of utilization, by one or more User Equipments, UEs, of one or more sidelink resources and/or sidelink resource configuration, for performing sidelink transmission, based on a probability value of a link interruption; and sending the first threshold and the one or more sidelink resources and/or the sidelink resource configuration to the one or more UEs.

In an implementation form of the fourth aspect, the method further comprises determining a second threshold indicating the start of utilization, by the one or more UEs, of the one or more sidelink resources and/or the sidelink resource configuration for performing sidelink transmission; and sending the second threshold to the one or more UEs.

In a further implementation form of the fourth aspect, the second threshold is indicative of an expected link interruption.

In a further implementation form of the fourth aspect, the method further comprises determining the first threshold and/or the second threshold further based on one or more of:
- a time information indicating a start and/or an end of a link interruption,
- a distance information indicating a start and/or an end of a link interruption,
- a predefined location information of a link interruption,
- a duration of a link interruption,
- a frequency of a link interruption,
- a predefined area,
- received information from the one or more UEs and/or another network entity.

In a further implementation form of the fourth aspect, a link interruption includes one or more of:
- an interruption of a communication over a link between the network entity and a determined UE connected over at least one link to one or more UEs;
- an interruption of a communication over at least one link between the network entity and the one or more UEs;
- an interruption of a communication over the at least one link between the determined UE and the one or more UEs.

In a further implementation form of the fourth aspect, the one or more sidelink resources and/or the sidelink resource configuration comprises at least one of:
- a configured grant,
- a dynamic grant,
- a time-frequency repetition pattern,
- a resource pool,
- a semi-persistent schedule,
- a one-shot schedule.

A fifth aspect of the invention provides a method for UE, the method comprising determining one or more sidelink resources and/or sidelink resource configuration for one or more UEs for performing sidelink transmission; determining a first threshold indicating the end of utilization, by the one or more UEs, of the one or more sidelink resources and/or a sidelink resource configuration for sidelink transmission, based on a probability value of a link interruption; sending, the one or more sidelink resources and/or the sidelink resource configuration to the one or more UEs, to be used in case of a link interruption, and sending the first threshold to the one or more UEs and/or a network entity.

In an implementation form of the fifth aspect, a link interruption includes one or more of:
- an interruption of a communication over a link between the network entity and a determined UE connected over at least one link to one or more UEs;
- an interruption of a communication over at least one link between the network entity and the one or more UEs;
- an interruption of a communication over the at least one link between the determined UE and the one or more UEs;

In a further implementation form of the fifth aspect, the method further comprises determining a second threshold indicating the start of utilization, by the one or more UEs, of the one or more sidelink resources and/or the sidelink resource configuration for performing sidelink transmission; and sending the second threshold to the one or more UEs and/or the network entity.

In a further implementation form of the fifth aspect, the second threshold is indicative of a link interruption that is expected.

In a further implementation form of the fifth aspect, the method further comprises determining the first threshold and/or the second threshold further based on one or more of
- a time information indicating a start and/or an end of a link interruption,
- a distance information indicating a start and/or an end of a link interruption,
- a predefined location information of a link interruption,
- a duration of a link interruption,
- a frequency of a link interruption,
- a predefined area,
- received information from the one or more UEs and/or another network entity.

In a further implementation form of the fifth aspect, the method further comprises indicating to the one or more UEs, a link interruption.

In a further implementation form of the fifth aspect, the one or more sidelink resources and/or the sidelink resource configuration comprises at least one of:
- a configured grant,
- a dynamic grant,
- a time-frequency repetition pattern,
- a resource pool,
- a semi-persistent schedule,
- a one-shot schedule.

In a further implementation form of the fifth aspect, the method further comprises obtaining from the network entity and/or another UE (e.g., an S-UE), one or more of:
- the one or more sidelink resources and/or the sidelink resource configuration,
- the first threshold,
- the second threshold.

It has to be noted that all devices, elements, units and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof.

### BRIEF DESCRIPTION OF DRAWINGS

The above described aspects and implementation forms of the present invention will be explained in the following description of specific embodiments in relation to the enclosed drawings, in which
- FIG. 1: is a schematic view of a network entity, according to an embodiment of the present invention.
- FIG. 2: is a schematic view of a UE, according to an embodiment of the present invention.
- FIG. 3: is a schematic view of another UE, according to an embodiment of the present invention.
- FIG. 4: is a schematic view of performing a sidelink transmission in case of an interruption of a communication over a link between the network entity and the S-UE, according to an embodiment of the present invention.
- FIG. 5: is a schematic view of performing a sidelink transmission in case of an expected interruption of a communication over a link between the network entity and the S-UE, according to an embodiment of the present invention.
- FIG. 6: is a schematic view of performing a sidelink transmission in case of an interruption of a communication over a link between the S-UE and the M-UE, according to an embodiment of the present invention.
- FIG. 7: is a schematic view of performing a sidelink transmission in case of an expected interruption of a communication over a link between the S-UE and the M-UE, according to an embodiment of the present invention.
- FIG. 8: is a schematic view of a configured grant by the network entity.
- FIG. 9: is a flowchart of a method for a network entity, according to an embodiment of the invention.
- FIG. 10: is a flowchart of a method for a UE, according to an embodiment of the invention.
- FIG. 11: is a flowchart of a method for a UE, according to an embodiment of the invention.

### DETAILED DESCRIPTION OF EMBODIMENTS

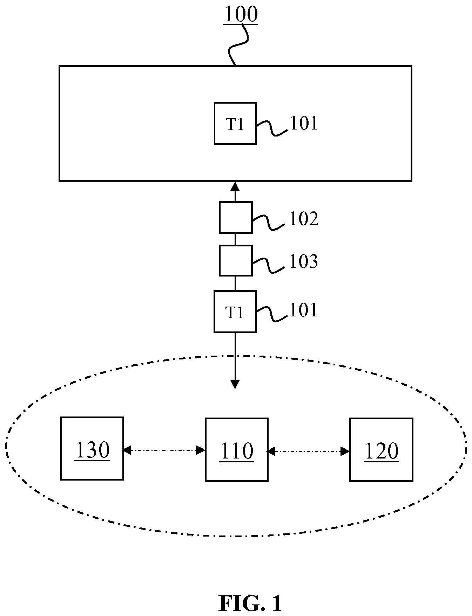

FIG. 1 is a schematic view of a network entity 100, according to an embodiment of the present invention.

The network entity comprises a processor (not shown in FIG. 1).

The processor is configured to determine a first threshold 101 indicating the end of utilization T1, by one or more User Equipments, UEs 110, 120, 130, of one or more sidelink resources 102 and/or sidelink resource configuration 103, for performing sidelink transmission, based on a probability value of a link interruption.

The network entity 100 is configured to send the first threshold 101 and the one or more sidelink resources 102 and/or the sidelink resource configuration 103 to the one or more UEs 110, 120, 130.

The network entity 100 may comprise a circuitry (not shown in FIG. 1) which may comprise hardware and software. The hardware may comprise analog or digital circuitry, or both analog and digital circuitry. In some embodiments, the circuitry comprises one or more processors and a non-volatile memory connected to the one or more processors. The non-volatile memory may carry executable program code which, when executed by the one or more processors, causes the device to perform the operations or methods described herein.

The following embodiment is not encompassed by the wording of the claims but is considered as useful for understanding the invention.

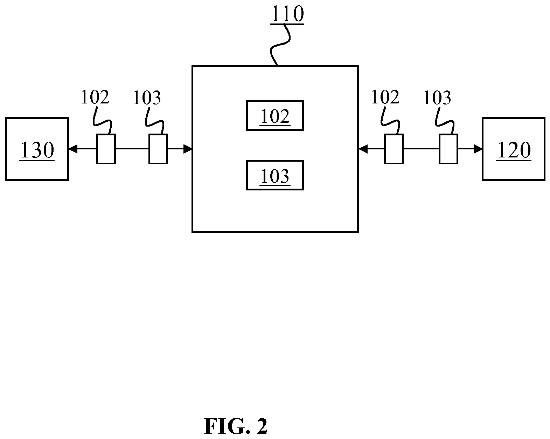

FIG. 2 is a schematic view of a UE, according to an embodiment of the present invention.

The UE 110 (it may be S-UE, or S-UE and M-UE at the same time) is configured to determine one or more sidelink resources 102 and/or sidelink resource configuration 103 for one or more UEs 120, 130 for performing sidelink transmission.

The UE 110 is configured to send, in case of a link interruption, the one or more sidelink resources 102 and/or the sidelink resource configuration 103 to the one or more UEs 120, 130.

The UE 110 may comprise a circuitry (not shown in FIG. 2) which may comprise hardware and software. The hardware may comprise analog or digital circuitry, or both analog and digital circuitry. In some embodiments, the circuitry comprises one or more processors and a non-volatile memory connected to the one or more processors. The non-volatile memory may carry executable program code which, when executed by the one or more processors, causes the device to perform the operations or methods described herein.

The following embodiment is not encompassed by the wording of the claims but is considered as useful for understanding the invention.

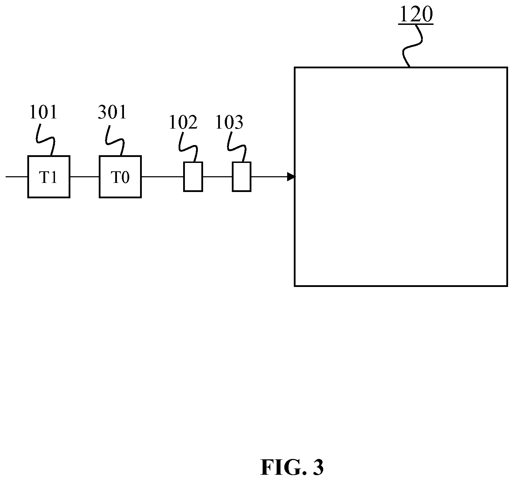

FIG. 3 is a schematic view of another UE, according to an embodiment of the present invention.

The UE 120 (it may be M-UE, or S-UE and M-UE at the same time) is configured to obtain a first threshold 101 and/or a second threshold 301 and one or more sidelink resources 102 and/or sidelink resource configuration 103, for performing sidelink transmission.

The UE 120 is configured to utilize, in case of a link interruption, the one or more sidelink resources 102 and/or the sidelink resource configuration 103 for sidelink transmission, from determining a link interruption or from the start of utilization T0 as indicated by the second threshold 301, until the end of utilization T1 as indicated by the first threshold 101.

The UE 120 may comprise a circuitry (not shown in FIG. 3) which may comprise hardware and software. The hardware may comprise analog or digital circuitry, or both analog and digital circuitry. In some embodiments, the circuitry comprises one or more processors and a non-volatile memory connected to the one or more processors. The non-volatile memory may carry executable program code which, when executed by the one or more processors, causes the device to perform the operations or methods described herein.

In the following, several exemplarily embodiments are presented for performing a sidelink transmission in case of interruption that could potentially occur in the network system, without limiting the present disclosure to these specific conditions.

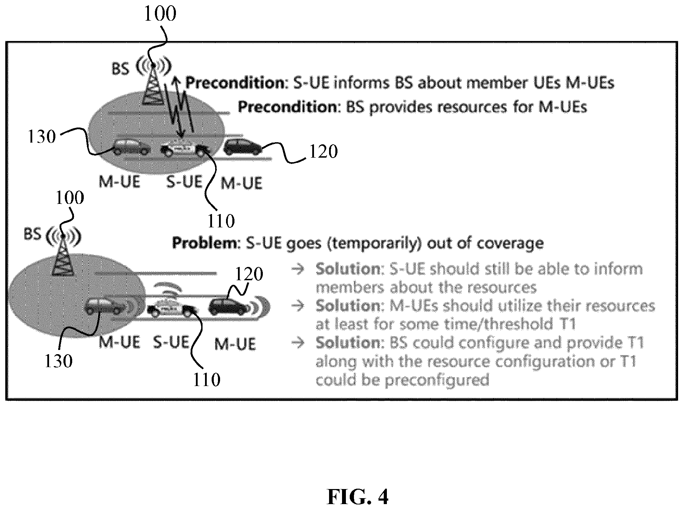

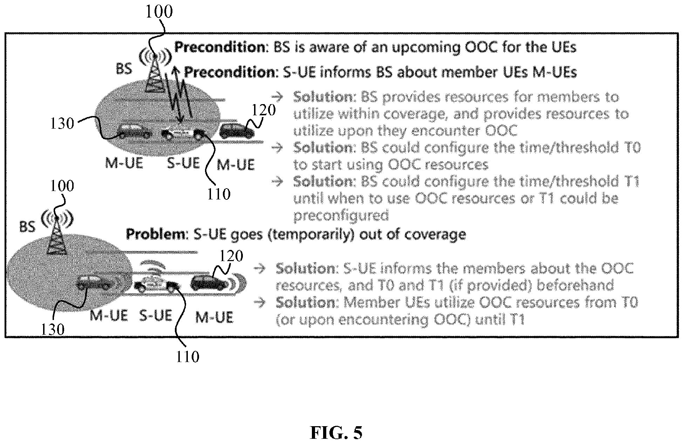

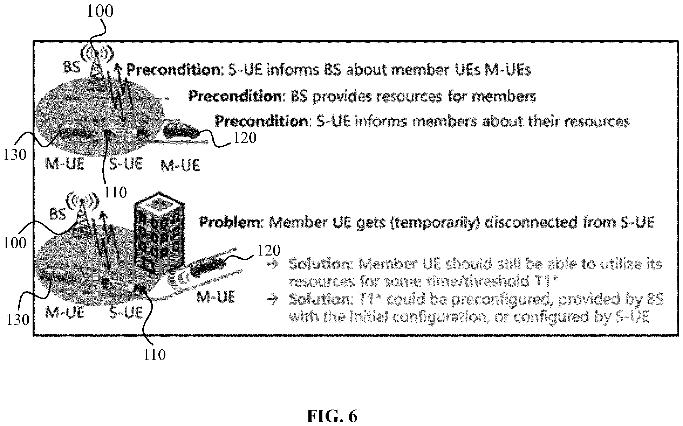

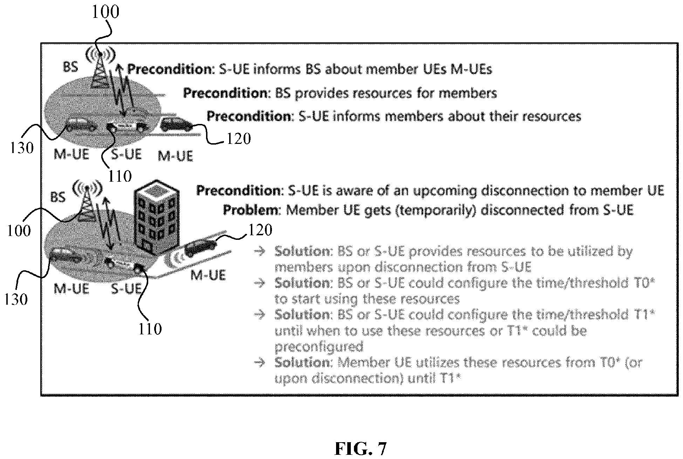

In FIG. 4 and FIG. 5, the interruptions of the link between UE 110 and the BS 100 are discussed. Moreover, in FIG. 6 and FIG. 7, the interruptions on the direct link between the UEs 110, 120, 130 are discussed.

Additionally, FIG. 4 and FIG. 6 present exemplarily embodiments, in which the interruption is not expected beforehand (i.e., unexpected interruption). Also, FIG. 5 and FIG. 7 illustrates embodiments, in which the interruption is expected beforehand (expected interruption), which may be expected beforehand by any one of the network entity 100 and/or the S-UE 110 and/or the M-UEs 120, 130.

To illustrate, such diverse conditions may especially arise under a mode where the network entity 100 is providing the one or more sidelink resources 102 and/or sidelink resource configuration 103 to a group of UEs (e.g., the M-UEs 120, 130), which engage in the SL communications. The one or more sidelink resources 102 and/or sidelink resource configuration 103 may be provided to them (e.g., to the M-UEs 120, 130) via another UE (called the S-UE 110) that is configured to forward it from the BS 100.

Reference is made to FIG. 4, which is a schematic view of performing a sidelink transmission in case of an interruption of a communication over a link between the network entity 100 and the S-UE 110, according to an embodiment of the present invention.

Interruption of the link (e.g., Uu RRC) may occur between the network entity 100 (i.e., the BS 100) and the S-UE 110 (i.e., the UE that is configured to forward the one or more sidelink resources 102 and/or sidelink resource configuration 103 to the M-UEs 120, 130 (another set of UEs)).

The precondition may be, for example, that the one or more sidelink resources 102 and/or sidelink resource configuration 103 of the M-UE(s) 120, 130 are provided to the S-UE 110 and/or the M-UE(s) 120, 130 by the BS 100. For example, the one or more sidelink resources 102 and/or sidelink resource configuration 103 may be provided when the S-UE 110 and/or the M-UE(s) 120, 130 are/were in the coverage of the BS 100.

The possible solution may be, for example, in the cases of the S-UE 110 having a connection interruption to the BS 100, (e.g., on the Uu RRC connection) or going (temporarily) out of coverage (OOC), since the S-UE already received the one or more sidelink resources 102 and/or sidelink resource configuration 103, from the BS 100, the S-UE 110 should still be able to inform the M-UEs 120, 130 of the one or more sidelink resources 102 and/or sidelink resource configuration 103. Moreover, the M-UE(s) 120, 130 should still be able to utilize the one or more sidelink resources 102 and/or sidelink resource configuration 103, at least until the end of utilization as indicated by the first threshold 101. The end of utilization (T1) may be, for example, time, distance, location information, etc.

Moreover, the end of utilization T1 may be determined (e.g., configured and further sent/forwarded) by the BS 100 (gNB) to the S-UE 110 and/or the M-UEs 120, 130. The end of utilization T1 may also be determined (configured and further sent/forwarded) by any UE, or may be pre-configured.

Reference is made to FIG. 5, which is a schematic view of performing a sidelink transmission in case of an expected interruption of a communication over a link between the network entity 100 and the S-UE 110, according to an embodiment of the present invention.

For example, the expected interruption may be the interruption of the link (e.g., Uu RRC) between the BS 110 and the S-UE 110, i.e., the UE that is configured to forward the one or more sidelink resources 102 and/or sidelink resource configuration 103 to the M-UEs 120, 130 (another set of UEs). Moreover, one or more of the network entities and/or the UEs (e.g., BS 100 and/or the S-UE 110 and/or the M-UE 120, 130) may be aware of the interruption or the OOC condition beforehand. The interruption may be expected, i.e. it may be known in advanced that the interruption may occur, etc.

The precondition may be, for example, the one or more sidelink resources 102 and/or sidelink resource configuration 103 of the M-UEs 120, 130 are provided to the S-UE 110 by the BS 100.

For example, the one or more sidelink resources 102 and/or sidelink resource configuration 103 may be provided when the S-UE 110 and/or the M-UE(s) 120, 130 were in the coverage of the BS 100.

The possible solution may be, for example, that the BS 100 also provides the one or more sidelink resources 102 and/or sidelink resource configuration 103 (which may be the same or different from those used when the interruption is not known beforehand, i.e., unexpected interruption) to be utilized upon the S-UE 110 encountering the expected interruption (e.g., the OOC).

The possible solution may be, for example, in the cases of the S-UE 110 having expected an interruption (e.g., the OOC), which may be for example, on the Uu RRC connection, that the S-UE 110 may still be able to inform the M-UEs 120, 130 by sending the one or more sidelink resources 102 and/or sidelink resource configuration 103. Moreover, the M-UEs 120, 130 may be able to utilize the one or more sidelink resources 102 and/or sidelink resource configuration 103at least until the end of utilization (T1, which may be a distance information, a time information, a location information, etc.) as indicated by the first threshold 101.

In addition, the second threshold 301 may be determined, which indicates the start of the utilization T0 (which may be the start time, a location information for starting the utilization, a distance information, etc.). The utilization starts with the T0 (indicated by the second threshold 301), instead of the condition of "upon encountering the OOC", and continues until the end of utilization T1 as indicated by the first threshold 101.

Furthermore, both first threshold 101 and second threshold (and/or the T0 and/or the T1) may be determined (and further sent/forwarded) by the BS 100 (e.g., gNB) to the S-UE 110 and/or the M-UEs 120, 130. The first threshold 101 and/or the second threshold 301 may also be determined (configured and further sent/forwarded) by any UE, or may be pre-configured.

Reference is made to FIG. 6, which is a schematic view of performing a sidelink transmission in case of an interruption of a communication over a link between the S-UE 110 and the M-UE 120, 130, according to an embodiment of the present invention.

The interruption of the link (e.g., PC5 RRC) may occur between the S-UE 110 (i.e., the UE that is configured to forward the one or more sidelink resources 102 and/or sidelink resource configuration 103 to the M-UEs 120, 130 (another set of UEs)) and one or more of M-UEs.

The precondition may be, for example, that the one or more sidelink resources 102 and/or sidelink resource configuration 103 of the M-UE(s) 120, 130 are provided by the BS 100 (gNB) and/or the S-UE 110, when S-UE 110 and the M-UEs 120, 130 are connected.

The possible solution may be, for example, in the cases of M-UE 120, 130 having interruptions of coverage of S-UE 110, (e.g., on the PC5 RRC connection), that the M-UE 120, 130 should still be able to utilize the one or more sidelink resources 102 and/or sidelink resource configuration 103 at least until the end of utilization (e.g., a time) T1 as indicated by the first threshold 101.

For example, if the M-UE still has V2V traffic to transmit, it will continue utilizing the resources it was assigned in coverage, during the intermittent coverage.

Moreover, the end of utilization T1 may be determined (e.g., configured and further sent/forwarded) by the BS 100 (gNB) to the S-UE 110 and/or the M-UEs 120, 130. The end of utilization T1 may also be determined (configured and further sent/forwarded) by any UE, or may be pre-configured.

Reference is made to FIG. 7, which is a schematic view of performing a sidelink transmission in case of an expected interruption of a communication over a link between the S-UE and the M-UE, according to an embodiment of the present invention.

For example, the expected interruption may be the interruption of the link (e.g., PC5 RRC) between the UE that is configured to forward one or more sidelink resources 102 and/or sidelink resource configuration 103 (S-UE 110) to another set of UEs (M-UEs 120, 130), and one of these UEs (M-UE 120, 130), where the S-UE 110 and/or the BS 100 are aware of the interruption or the OOC condition beforehand.

The precondition may be, for example, that the one or more sidelink resources 102 and/or sidelink resource configuration 103 of the M-UEs 120, 130 are provided (e.g., configured and/or forwarded) by the S-UE 110, when SUE 110 and M-UEs 120, 130 are connected.

The possible solution may be, for example, that the BS 100 and/or S-UE 110 also provide the one or more sidelink resources 102 and/or sidelink resource configuration 103 to be utilized upon M-UEs 120, 130 encountering the interruption/OOC of the link to the S-UE 110.

Moreover, in the cases of M-UE 120, 130 having interruptions/OOC, (e.g., on the PC5 RRC connection), the M-UEs 120, 130 may be able to utilize the one or more sidelink resources 102 and/or sidelink resource configuration 103 at least until the end of utilization (T1, which may be a distance information, a time information, a location information, etc.) as indicated by the first threshold 101.

In addition, the second threshold 301 may be determined, which indicates the start of the utilization T0 (which may be the start time, a location information for starting the utilization, a distance information, etc.). The utilization starts with the T0 (indicated by the second threshold 301), instead of the condition of "upon encountering the OOC", and continues until the end of utilization T1 as indicated by the first threshold 101.

Furthermore, both first threshold 101 and second threshold (and/or the T0 and/or the T1) may be determined (and further sent/forwarded) by the BS 100 (e.g., gNB) to the S-UE 110 and/or the M-UEs 120, 130. The first threshold 101 and/or the second threshold 301 may also be determined (configured and further sent/forwarded) by any UE, or may be pre-configured.

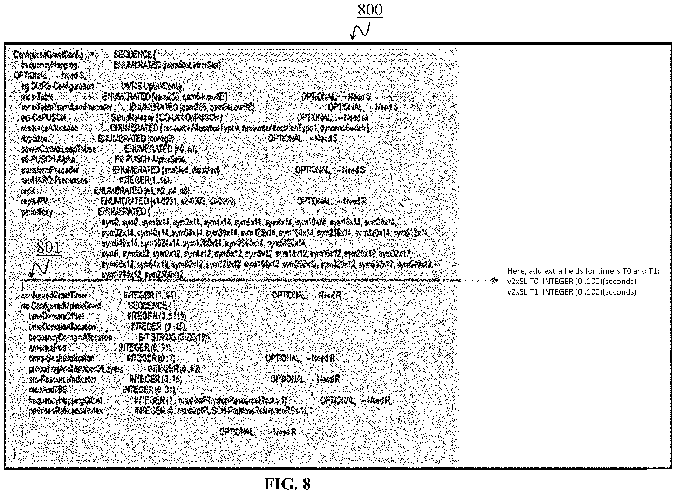

Reference is made to FIG. 8, which is a schematic view of a configured grant (e.g., the configured grant is based on a semi-persistent scheduling configuration) by the network entity 100.

The scheme 800 and implementation illustrated in FIG. 8 is exemplarily illustrated for the embodiment of FIG. 5 in which an expected interruption of a communication over a link between the network entity 100 and the S-UE 100.

The precondition is that an interruption on the link between the BS 100 and S-UE 110 happens, where the BS 100 is aware of the interruption beforehand. Moreover, the BS 100 configures and provides the first threshold 101 and the second threshold 301 (e.g., the end of utilization T1 and the start of utilization T0 as timers), and indicates them (for example at 801 in scheme 800 of FIG.8) in the SL type-1 configured grant configuration which is provided to S-UE 110 in coverage to be forwarded to one of the M-UEs 120, 130.

Accordingly, the M-UE 120, 130 utilizes this configured grant during the period between T0 and T1 corresponding to the interruption time of the link.

Moreover, the first threshold 101 and the second threshold 301 may be provided within the 3GPP NR Uu ConfiguredGrantConfig information element, indicated at 801 in scheme 800 of FIG. 8. Note that the NR SL configured grants would have a similar set of parameters, however the final version of related specification is not yet available in the standard in Release 16.

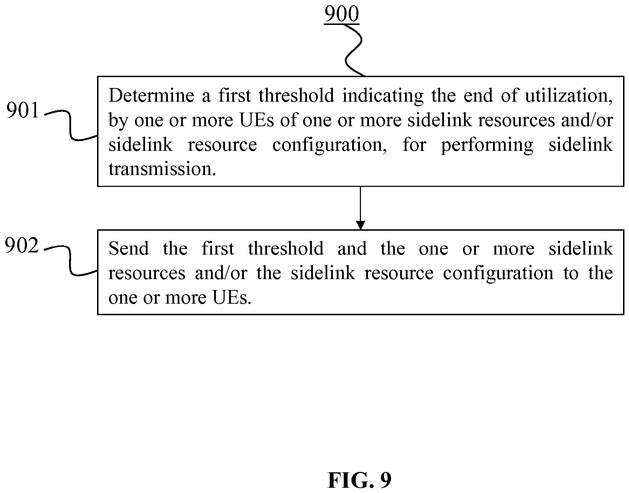

FIG. 9 shows a method 900 according to an embodiment of the invention for network entity 100. The method 900 may be carried out by the network entity 100, as it described above.

The method 900 comprises a step 901 of determining a first threshold 101 indicating the end of utilization T1, by one or more User Equipments, UEs 110, 120, 130, of one or more sidelink resources 102 and/or sidelink resource configuration 103, for performing sidelink transmission.

Generally, determining the first threshold 101 is based on a probability value of a link interruption.

The method 900 further comprises a step 902 of sending the first threshold 101 and the one or more sidelink resources 102 and/or the sidelink resource configuration 103 to the one or more UEs 110, 120, 130.

The following embodiment is not encompassed by the wording of the claims but is considered as useful for understanding the invention.

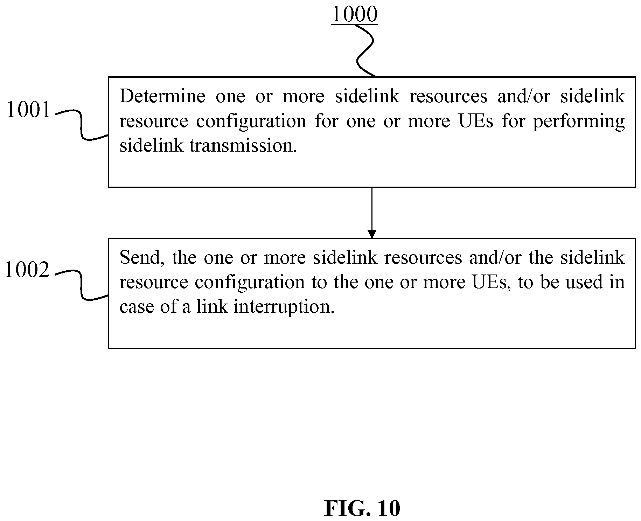

FIG. 10 shows a method 1000 according to an embodiment of the invention for UE 110. The method 1000 may be carried out by the UE 110 (and/or UE 120 and/or UE 130), as it described above.

The method 1000 comprises a step 1001 of determining one or more sidelink resources 102 and/or sidelink resource configuration 103 for one or more UEs 120, 130 for performing sidelink transmission.

The method 1000 further comprises a step 1002 of sending, the one or more sidelink resources 102 and/or the sidelink resource configuration 103 to the one or more UEs 120, 130, to be used in case of a link interruption.

The following embodiment is not encompassed by the wording of the claims but is considered as useful for understanding the invention.

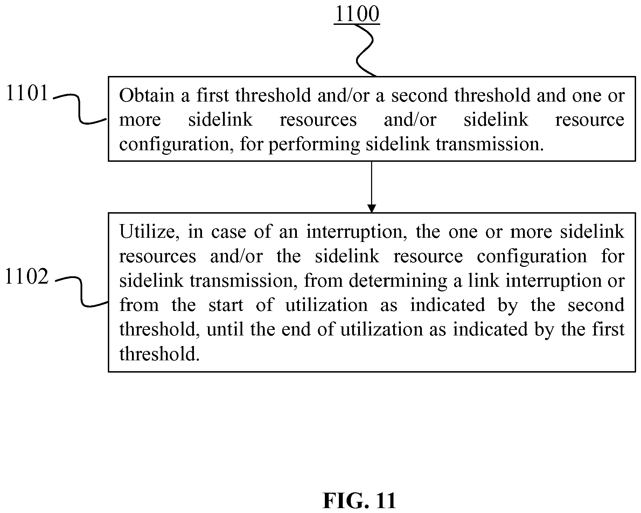

FIG. 11 shows a method 1100 according to an embodiment of the invention for UE 120. The method 1100 may be carried out by the UE 120 (and/or UE 110 and/or UE 130), as it described above.

The method 1100 comprises a step 1101 of obtaining a first threshold 101 and/or a second threshold 301 and one or more sidelink resources 102 and/or sidelink resource configuration 103, for performing sidelink transmission.

The method 1100 further comprises a step 1102 of utilizing, in case of a link interruption, the one or more sidelink resources 102 and/or the sidelink resource configuration 103 for sidelink transmission, from determining a link interruption or from the start of utilization T0 as indicated by the second threshold 301, until the end of utilization T1 as indicated by the first threshold 101.

The present invention has been described in conjunction with various embodiments as examples as well as implementations. However, other variations can be understood and effected by those persons skilled in the art and practicing the claimed invention, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

### List of acronyms and glossaries:

| | |
|---|---|
| - 3GPP | 3rd Generation Partnership Project |
| - 5G | 5th Generation |
| - BS | Base Station |
| - eNB | Evolved Node B |
| - gNB | Next Generation Node B |
| - LTE | Long-Term Evolution |
| - LTE-A | LTE Advanced |
| - M-UE | Member UE |
| - RRC | Radio Resource Control |
| - S-UE | Scheduling UE |
| - NR | New Radio |
| - QoS | Quality of Service |
| - SI | Study Item |
| - SIB | System Information Block |
| - SL | Sidelink |
| - UE | User Equipment |
| - V2V | Vehicle-to-Vehicle |
| - V2X | Vehicle-to-Everything |
| - WI Work | Item |

The possible solution may be, for example, in the cases of the S-UE 110 having expected an interruption (e.g., the OOC), which may be for example, on the Uu RRC connection, that the S-UE 110 may still be able to inform the M-UEs 120, 130 by sending the one or more sidelink resources 102 and/or sidelink resource configuration 103. Moreover, the M-UEs 120, 130 may be able to utilize the one or more sidelink resources 102 and/or sidelink resource configuration 103at least until the end of utilization (T1, which may be a distance information, a time information, a location information, etc.) as indicated by the first threshold 101.

In addition, the second threshold 301 may be determined, which indicates the start of the utilization T0 (which may be the start time, a location information for starting the utilization, a distance information, etc.). The utilization starts with the T0 (indicated by the second threshold 301), instead of the condition of "upon encountering the OOC", and continues until the end of utilization T1 as indicated by the first threshold 101.

Furthermore, both first threshold 101 and second threshold (and/or the T0 and/or the T1) may be determined (and further sent/forwarded) by the BS 100 (e.g., gNB) to the S-UE 110 and/or the M-UEs 120, 130. The first threshold 101 and/or the second threshold 301 may also be determined (configured and further sent/forwarded) by any UE, or may be pre-configured.

Reference is made to FIG. 6, which is a schematic view of performing a sidelink transmission in case of an interruption of a communication over a link between the S-UE 110 and the M-UE 120, 130, according to an embodiment of the present invention.

The interruption of the link (e.g., PC5 RRC) may occur between the S-UE 110 (i.e., the UE that is configured to forward the one or more sidelink resources 102 and/or sidelink resource configuration 103 to the M-UEs 120, 130 (another set of UEs)) and one or more of M-UEs.

The precondition may be, for example, that the one or more sidelink resources 102 and/or sidelink resource configuration 103 of the M-UE(s) 120, 130 are provided by the BS 100 (gNB) and/or the S-UE 110, when S-UE 110 and the M-UEs 120, 130 are connected.

The possible solution may be, for example, in the cases of M-UE 120, 130 having interruptions of coverage of S-UE 110, (e.g., on the PC5 RRC connection), that the M-UE 120, 130 should still be able to utilize the one or more sidelink resources 102 and/or sidelink resource configuration 103 at least until the end of utilization (e.g., a time) T1 as indicated by the first threshold 101.

For example, if the M-UE still has V2V traffic to transmit, it will continue utilizing the resources it was assigned in coverage, during the intermittent coverage.

Moreover, the end of utilization T1 may be determined (e.g., configured and further sent/forwarded) by the BS 100 (gNB) to the S-UE 110 and/or the M-UEs 120, 130. The end of utilization T1 may also be determined (configured and further sent/forwarded) by any UE, or may be pre-configured.

Reference is made to FIG. 7, which is a schematic view of performing a sidelink transmission in case of an expected interruption of a communication over a link between the S-UE and the M-UE, according to an embodiment of the present invention.

For example, the expected interruption may be the interruption of the link (e.g., PC5 RRC) between the UE that is configured to forward one or more sidelink resources 102 and/or sidelink resource configuration 103 (S-UE 110) to another set of UEs (M-UEs 120, 130), and one of these UEs (M-UE 120, 130), where the S-UE 110 and/or the BS 100 are aware of the interruption or the OOC condition beforehand.

The precondition may be, for example, that the one or more sidelink resources 102 and/or sidelink resource configuration 103 of the M-UEs 120, 130 are provided (e.g., configured and/or forwarded) by the S-UE 110, when S-UE 110 and M-UEs 120, 130 are connected.

The possible solution may be, for example, that the BS 100 and/or S-UE 110 also provide the one or more sidelink resources 102 and/or sidelink resource configuration 103 to be utilized upon M-UEs 120, 130 encountering the interruption/OOC of the link to the S-UE 110.

Moreover, in the cases of M-UE 120, 130 having interruptions/OOC, (e.g., on the PC5 RRC connection), the M-UEs 120, 130 may be able to utilize the one or more sidelink resources 102 and/or sidelink resource configuration 103 at least until the end of utilization (T1, which may be a distance information, a time information, a location information, etc.) as indicated by the first threshold 101.

In addition, the second threshold 301 may be determined, which indicates the start of the utilization T0 (which may be the start time, a location information for starting the utilization, a distance information, etc.). The utilization starts with the T0 (indicated by the second threshold 301), instead of the condition of "upon encountering the OOC", and continues until the end of utilization T1 as indicated by the first threshold 101.

Furthermore, both first threshold 101 and second threshold (and/or the T0 and/or the T1) may be determined (and further sent/forwarded) by the BS 100 (e.g., gNB) to the S-UE 110 and/or the M-UEs 120, 130. The first threshold 101 and/or the second threshold 301 may also be determined (configured and further sent/forwarded) by any UE, or may be pre-configured.

Reference is made to FIG. 8, which is a schematic view of a configured grant (e.g., the configured grant is based on a semi-persistent scheduling configuration) by the network entity 100.

The scheme 800 and implementation illustrated in FIG. 8 is exemplarily illustrated for the embodiment of FIG. 5 in which an expected interruption of a communication over a link between the network entity 100 and the S-UE 100.

The precondition is that an interruption on the link between the BS 100 and S-UE 110 happens, where the BS 100 is aware of the interruption beforehand. Moreover, the BS 100 configures and provides the first threshold 101 and the second threshold 301 (e.g., the end of utilization T1 and the start of utilization T0 as timers), and indicates them (for example at 801 in scheme 800 of FIG.8) in the SL type-1 configured grant configuration which is provided to S-UE 110 in coverage to be forwarded to one of the M-UEs 120, 130. Accordingly, the M-UE 120, 130 utilizes this configured grant during the period between T0 and T1 corresponding to the interruption time of the link.

Moreover, the first threshold 101 and the second threshold 301 may be provided within the 3GPP NR Uu ConfiguredGrantConfig information element, indicated at 801 in scheme 800 of FIG. 8. Note that the NR SL configured grants would have a similar set of parameters, however the final version of related specification is not yet available in the standard in Release 16.

FIG. 9 shows a method 900 according to an embodiment of the invention for network entity 100. The method 900 may be carried out by the network entity 100, as it described above.

The method 900 comprises a step 901 of determining a first threshold 101 indicating the end of utilization T1, by one or more User Equipments, UEs 110, 120, 130, of one or more sidelink resources 102 and/or sidelink resource configuration 103, for performing sidelink transmission.

The method 900 further comprises a step 902 of sending the first threshold 101 and the one or more sidelink resources 102 and/or the sidelink resource configuration 103 to the one or more UEs 110, 120, 130.

FIG. 10 shows a method 1000 according to an embodiment of the invention for UE 110. The method 1000 may be carried out by the UE 110 (and/or UE 120 and/or UE 130), as it described above.

The method 1000 comprises a step 1001 of determining one or more sidelink resources 102 and/or sidelink resource configuration 103 for one or more UEs 120, 130 for performing sidelink transmission.

The method 1000 further comprises a step 1002 of sending, the one or more sidelink resources 102 and/or the sidelink resource configuration 103 to the one or more UEs 120, 130, to be used in case of a link interruption.

FIG. 11 shows a method 1100 according to an embodiment of the invention for UE 120. The method 1100 may be carried out by the UE 120 (and/or UE 110 and/or UE 130), as it described above.

The method 1100 comprises a step 1101 of obtaining a first threshold 101 and/or a second threshold 301 and one or more sidelink resources 102 and/or sidelink resource configuration 103, for performing sidelink transmission.

The method 1100 further comprises a step 1102 of utilizing, in case of a link interruption, the one or more sidelink resources 102 and/or the sidelink resource configuration 103 for sidelink transmission, from determining a link interruption or from the start of utilization T0 as indicated by the second threshold 301, until the end of utilization T1 as indicated by the first threshold 101.

The present invention has been described in conjunction with various embodiments as examples as well as implementations. However, other variations can be understood and effected by those persons skilled in the art and practicing the claimed invention, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

### List of acronyms and glossaries:

| | |
|---|---|
| - 3GPP | 3rd Generation Partnership Project |
| - 5G | 5th Generation |
| - BS | Base Station |
| - eNB | Evolved Node B |
| - gNB | Next Generation Node B |
| - LTE | Long-Term Evolution |
| - LTE-A | LTE Advanced |
| - M-UE | Member UE |
| - RRC | Radio Resource Control |
| - S-UE | Scheduling UE |
| - NR | New Radio |
| - QoS | Quality of Service |
| - SI | Study Item |
| - SIB | System Information Block |
| - SL | Sidelink |
| - UE | User Equipment |
| - V2V | Vehicle-to-Vehicle |
| - V2X | Vehicle-to-Everything |
| - WI | Work Item |

## Claims

1. Network entity (100) comprising a processor configured to:
determine a first threshold (101) indicating the end of utilization (T1), by one or more User Equipments, UEs (110, 120, 130), of one or more sidelink resources (102) and/or sidelink resource configuration (103), for performing sidelink transmission, based on a probability value of a link interruption,
wherein the network entity is configured to:
send the first threshold (101) and the one or more sidelink resources (102) and/or the sidelink resource configuration (103) to the one or more UEs (110, 120, 130).

2. The network entity (100) according to claim 1, wherein the processors is further configured to:
determine a second threshold (301) indicating the start of utilization (T0), by the one or more UEs (110, 120, 130), of the one or more sidelink resources (102) and/or the sidelink resource configuration (103) for performing sidelink transmission,
wherein the network entity is further configured to:
send the second threshold (301) to the one or more UEs (110, 120, 130).

3. The network entity (100) according to claim 2, wherein:
the second threshold (301) is indicative of an expected link interruption.

4. The network entity (100) according to claim 3, wherein the processors is further configured to:
determine the first threshold (101) and/or the second threshold (301) further based on one or more of:
- a time information indicating a start and/or an end of a link interruption,
- a distance information indicating a start and/or an end of a link interruption,
- a predefined location information of a link interruption,
- a duration of a link interruption,
- a frequency of a link interruption,
- a predefined area.

5. The network entity (100) according to one of the claims 3 to 4, wherein:
a link interruption includes one or more of:
- an interruption of a communication over a link between the network entity (100) and a determined UE (110) connected over at least one link to one or more UEs (120, 130);
- an interruption of a communication over at least one link between the network entity (100) and the one or more UEs (120, 130);
- an interruption of a communication over the at least one link between the determined UE (110) and the one or more UEs (120, 130).

6. The network entity (100) according to one of the claims 1 to 5, wherein:
the one or more sidelink resources (102) and/or the sidelink resource configuration (103) comprises at least one of:
- a configured grant,
- a dynamic grant,
- a time-frequency repetition pattern,
- a resource pool,
- a semi-persistent schedule,
- a one-shot schedule.

7. A UE (110) configured to:
determine one or more sidelink resources (102) and/or sidelink resource configuration (103) for one or more UEs (120, 130) for performing sidelink transmission;
determine a first threshold (101) indicating the end of utilization (T1), by the one or more UEs (120, 130), of the one or more sidelink resources (102) and/or a sidelink resource configuration (103) for sidelink transmission, based on a probability value of a link interruption;
send, the one or more sidelink resources (102) and/or the sidelink resource configuration (103) to the one or more UEs (120, 130), to be used in case of a link interruption; and
send the first threshold (T1) to the one or more UEs (120, 130) and/or a network entity (100).

8. The UE (110) according to claim 7, wherein:
a link interruption includes one or more of:
- an interruption of a communication over a link between the network entity (100) and a determined UE (110) connected over at least one link to one or more UEs (120, 130);
- an interruption of a communication over at least one link between the network entity (100) and the one or more UEs (120, 130);
- an interruption of a communication over the at least one link between the determined UE (110) and the one or more UEs (120, 130).

9. The UE (110) according to claim 7 or 8, further configured to:
determine a second threshold (301) indicating the start of utilization (T0), by the one or more UEs (120, 130), of the one or more sidelink resources (102) and/or the sidelink resource configuration (103) for performing sidelink transmission; and
send the second threshold (301) to the one or more UEs (120, 130) and/or the network entity (100).

10. Method (900) for network entity (100), the method (900) comprising:
determining (901) a first threshold (101) indicating the end of utilization (T1), by one or more User Equipments, UEs (110, 120, 130), of one or more sidelink resources (102) and/or sidelink resource configuration (103), for performing sidelink transmission, based on a probability value of a link interruption; and
sending (902) the first threshold (101) and the one or more sidelink resources (102) and/or the sidelink resource configuration (103) to the one or more UEs (110, 120, 130).

11. Method (1000) for UE (110), the method (1000) comprising:
determining (1001) one or more sidelink resources (102) and/or sidelink resource configuration (103) for one or more UEs (120, 130) for performing sidelink transmission;
determining a first threshold (101) indicating the end of utilization (T1), by the one or more UEs (120, 130), of the one or more sidelink resources (102) and/or a sidelink resource configuration (103) for sidelink transmission, based on a probability value of a link interruption;
sending (1002), the one or more sidelink resources (102) and/or the sidelink resource configuration (103) to the one or more UEs (120, 130), to be used in case of a link interruption, and
sending the first threshold (T1) to the one or more UEs (120, 130) and/or a network entity (100).

## Patentansprüche

1. Netzwerkentität (100), umfassend einen Prozessor, konfiguriert zum:
Bestimmen eines ersten Schwellenwerts (101), der das Ende der Nutzung (T1), durch eine oder mehrere Benutzereinrichtungen, UEs (110, 120, 130), einer oder mehrerer "Sidelink"-Betriebsmittel (102) und/oder einer "Sidelink"-Betriebsmittel-Konfiguration (103) zum Durchführen von "Sidelink"-Übertragungen basierend auf einem Wahrscheinlichkeitswert einer Verbindungsunterbrechung angibt,
wobei die Netzwerkentität konfiguriert ist zum:
Senden des ersten Schwellenwerts (101) und des einen oder der mehreren "Sidelink"-Betriebsmittel (102) und/oder der "Sidelink"-Betriebsmittel-Konfiguration (103) an das eine oder die mehreren UEs (110, 120, 130).

2. Netzwerkentität (100) nach Anspruch 1, wobei die Prozessoren ferner konfiguriert sind zum:
Bestimmen eines zweiten Schwellenwerts (301), der den Beginn der Nutzung (T0), durch das eine oder die mehreren UEs (110, 120, 130), des einen oder der mehreren "Sidelink"-Betriebsmittel (102) und/oder der "Sidelink"-Betriebsmittel-Konfiguration (103) zum Durchführen von "Sidelink"-Übertragungen angibt,
wobei die Netzwerkentität ferner konfiguriert ist zum:
Senden des zweiten Schwellenwerts (301) an die eine oder mehreren UEs (110, 120, 130).

3. Netzwerkentität (100) nach Anspruch 2, wobei:
der zweite Schwellenwert (301) eine erwartete Verbindungsunterbrechung angibt.

4. Netzwerkentität (100) nach Anspruch 3, wobei die Prozessoren ferner konfiguriert sind zum:
Bestimmen des ersten Schwellenwerts (101) und/oder des zweiten Schwellenwerts (301) ferner basierend auf einem oder mehreren von Folgendem:
- eine Zeitinformation, die einen Beginn und/oder ein Ende einer Verbindungsunterbrechung angibt,
- eine Entfernungsinformation, die einen Beginn und/oder ein Ende einer Verbindungsunterbrechung angibt,
- eine im Voraus definierte Ortsinformation einer Verbindungsunterbrechung,
- eine Dauer einer Verbindungsunterbrechung,
- eine Frequenz einer Verbindungsunterbrechung,
- ein im Voraus definiertes Gebiet.

5. Netzwerkentität (100) nach einem der Ansprüche 3 bis 4, wobei:
eine Verbindungsunterbrechung eines oder mehrere von Folgendem enthält:
- eine Unterbrechung einer Kommunikation über eine Verbindung zwischen der Netzwerkentität (100) und einer bestimmten UE (110), die über mindestens eine Verbindung mit einer oder mehreren UEs (120, 130) verbunden ist;
- eine Unterbrechung einer Kommunikation über mindestens eine Verbindung zwischen der Netzwerkentität (100) und der einen oder den mehreren UEs (120, 130);
- eine Unterbrechung einer Kommunikation über die mindestens eine Verbindung zwischen der bestimmten UE (110) und der einen oder den mehreren UEs (120, 130).

6. Netzwerkentität (100) nach einem der Ansprüche 1 bis 5, wobei:
das eine oder die mehreren "Sidelink"-Betriebsmittel (102) und/oder die "Sidelink"-Betriebsmittel-Konfiguration (103) mindestens eines von Folgendem umfasst:
- eine konfigurierte Bewilligung,
- eine dynamische Bewilligung,
- ein Zeit-Frequenz-Wiederholungsmuster,
- eine Betriebsmittelzusammenstellung,
- einen semi-beständigen Zeitplan,
- einen Einmal-Zeitplan.

7. UE (110), konfiguriert zum:
Bestimmen eines oder mehrerer "Sidelink"-Betriebsmittel (102) und/oder einer "Sidelink"-Betriebsmittel-Konfiguration (103) für eine oder mehrere UEs (120, 130) zum Durchführen von "Sidelink"-Übertragungen;
Bestimmen eines ersten Schwellenwerts (101), der das Ende der Nutzung (T1), durch die eine oder mehreren UEs (120, 130), des einen oder der mehreren "Sidelink"-Betriebsmittel (102) und/oder einer "Sidelink"-Betriebsmittel-Konfiguration (103) für "Sidelink"-Übertragungen basierend auf einem Wahrscheinlichkeitswert einer Verbindungsunterbrechung angibt;
Senden des einen oder der mehreren "Sidelink"-Betriebsmittel (102) und/oder der "Sidelink"-Betriebsmittel-Konfiguration (103) an das eine oder die mehreren UEs (120, 130), um im Fall einer Verbindungsunterbrechung verwendet zu werden; und
Senden des ersten Schwellenwerts (T1) an das eine oder die mehreren UEs (120, 130) und/oder eine Netzwerkentität (100).

8. UE (110) nach Anspruch 7, wobei:
eine Verbindungsunterbrechung eines oder mehrere von Folgendem enthält:
- eine Unterbrechung einer Kommunikation über eine Verbindung zwischen der Netzwerkentität (100) und einer bestimmten UE (110), die über mindestens eine Verbindung mit einer oder mehreren UEs (120, 130) verbunden ist;
- eine Unterbrechung einer Kommunikation über mindestens eine Verbindung zwischen der Netzwerkentität (100) und der einen oder den mehreren UEs (120, 130);
- eine Unterbrechung einer Kommunikation über die mindestens eine Verbindung zwischen der bestimmten UE (110) und der einen oder den mehreren UEs (120, 130).

9. UE (110) nach Anspruch 7 oder 8, ferner konfiguriert zum:
Bestimmen eines zweiten Schwellenwerts (301), der den Beginn der Nutzung (T0),
durch die eine oder mehreren UEs (120, 130), des einen oder der mehreren "Sidelink"-Betriebsmittel (102) und/oder der "Sidelink"-Betriebsmittel-Konfiguration (103) zum Durchführen von "Sidelink"-Übertragungen angibt; und
Senden des zweiten Schwellenwerts (301) an die eine oder mehreren UEs (120, 130) und/oder die Netzwerkentität (100).

10. Verfahren (900) für Netzwerkentität (100), das Verfahren (900) umfassend:
Bestimmen (901) eines ersten Schwellenwerts (101), der das Ende der Nutzung (T1), durch eine oder mehrere Benutzereinrichtungen, UEs (110, 120, 130), einer oder
mehrerer "Sidelink"-Betriebsmittel (102) und/oder einer "Sidelink"-Betriebsmittel-Konfiguration (103) zum Durchführen von "Sidelink"-Übertragungen basierend auf einem Wahrscheinlichkeitswert einer Verbindungsunterbrechung angibt; und
Senden (902) des ersten Schwellenwerts (101) und des einen oder der mehreren "Sidelink"-Betriebsmittel (102) und/oder der "Sidelink"-Betriebsmittel-Konfiguration (103) an das eine oder die mehreren UEs (110, 120, 130).

11. Verfahren (1000) für UE (110), das Verfahren (1000) umfassend:
Bestimmen (1001) eines oder mehrerer "Sidelink"-Betriebsmittel (102) und/oder einer "Sidelink"-Betriebsmittel-Konfiguration (103) für eine oder mehrere UEs (120, 130) zum Durchführen von "Sidelink"-Übertragungen;
Bestimmen eines ersten Schwellenwerts (101), der das Ende der Nutzung (T1), durch das eine oder die mehreren UEs (120, 130), des einen oder der mehreren "Sidelink"-Betriebsmittel (102) und/oder einer "Sidelink"-Betriebsmittel-Konfiguration (103) für "Sidelink"-Übertragungen basierend auf einem Wahrscheinlichkeitswert einer Verbindungsunterbrechung angibt;
Senden (1002) des einen oder der mehreren "Sidelink"-Betriebsmittel (102) und/oder der "Sidelink"-Betriebsmittel-Konfiguration (103) an das eine oder die mehreren UEs (120, 130), um im Fall einer Verbindungsunterbrechung verwendet zu werden, und Senden des ersten Schwellenwerts (T1) an das eine oder die mehreren UEs (120, 130) und/oder eine Netzwerkentität (100).

## Revendications

1. Entité de réseau (100) comprenant un processeur configuré pour :
déterminer un premier seuil (101) indiquant la fin d'utilisation (T1), par un ou plusieurs Équipements Utilisateurs, UE (110, 120, 130), d'une ou plusieurs ressources de liaison latérale (102) et/ou d'une configuration de ressources de liaison latérale (103), pour réaliser une transmission en liaison latérale, sur la base d'une valeur de probabilité d'une interruption de liaison,
l'entité de réseau étant configurée pour :
envoyer le premier seuil (101) et la ou les ressources de liaison latérale (102) et/ou la configuration de ressources de liaison latérale (103) au ou aux UE (110, 120, 130).

2. Entité de réseau (100) selon la revendication 1, le processeur étant en outre configuré pour :
déterminer un second seuil (301) indiquant le début d'utilisation (T0), par le ou les UE (110, 120, 130), de la ou des ressources de liaison latérale (102) et/ou de la configuration de ressources de liaison latérale (103) pour réaliser une transmission en liaison latérale,
l'entité de réseau étant en outre configurée pour :
envoyer le second seuil (301) au ou aux UE (110, 120, 130).

3. Entité de réseau (100) selon la revendication 2,
le second seuil (301) étant indicatif d'une interruption de liaison attendue.

4. Entité de réseau (100) selon la revendication 3, le processeur étant en outre configuré pour :
déterminer le premier seuil (101) et/ou le second seuil (301) en outre sur la base d'un ou plusieurs des éléments suivants :
- des informations temporelles indiquant un début et/ou une fin d'une interruption de liaison,
- des informations de distance indiquant un début et/ou une fin d'une interruption de liaison,
- des informations de localisation prédéfinie d'une interruption de liaison,
- une durée d'une interruption de liaison,
- une fréquence d'une interruption de liaison,
- une zone prédéfinie.

5. Entité de réseau (100) selon l'une des revendications 3 et 4,
une interruption de liaison comprenant un ou plusieurs des éléments suivants :
- une interruption d'une communication sur une liaison entre l'entité de réseau (100) et un UE déterminé (110) connecté sur au moins une liaison à un ou plusieurs UE (120, 130) ;
- une interruption d'une communication sur au moins une liaison entre l'entité de réseau (100) et le ou les UE (120, 130) ;
- une interruption d'une communication sur l'au moins une liaison entre l'UE déterminé (110) et le ou les UE (120, 130).

6. Entité de réseau (100) selon l'une des revendications 1 à 5,
la ou les ressources de liaison latérale (102) et/ou la configuration de ressources de liaison latérale (103) comprenant au moins l'un des éléments suivants :
- une attribution configurée ;
- une attribution dynamique ;
- un motif de répétition temps-fréquence ;
- un groupe de ressources ;
- une planification semi-persistante ;
- une planification unique.

7. UE (110) configuré pour :
déterminer une ou plusieurs ressources de liaison latérale (102) et/ou une configuration de ressources de liaison latérale (103) pour un ou plusieurs UE (120, 130) pour réaliser une transmission en liaison latérale ;
déterminer un premier seuil (101) indiquant la fin d'utilisation (T1), par le ou les UE (120, 130), de la ou des ressources de liaison latérale (102) et/ou d'une configuration de ressources de liaison latérale (103) pour la transmission en liaison latérale, sur la base d'une valeur de probabilité d'une interruption de liaison ;
envoyer la ou les ressources de liaison latérale (102) et/ou la configuration de ressources de liaison latérale (103) au ou aux UE (120, 130), à utiliser en cas d'interruption de liaison ; et
envoyer le premier seuil (T1) au ou aux UE (120, 130) et/ou à une entité de réseau (100).

8. UE (110) selon la revendication 7,
une interruption de liaison comprenant un ou plusieurs des éléments suivants :
- une interruption d'une communication sur une liaison entre l'entité de réseau (100) et un UE déterminé (110) connecté sur au moins une liaison à un ou plusieurs UE (120, 130) ;
- une interruption d'une communication sur au moins une liaison entre l'entité de réseau (100) et le ou les UE (120, 130) ;
- une interruption d'une communication sur l'au moins une liaison entre l'UE déterminé (110) et le ou les UE (120, 130).

9. UE (110) selon la revendication 7 ou 8, configuré en outre pour :
déterminer un second seuil (301) indiquant le début d'utilisation (T0), par le ou les UE (120, 130), de la ou des ressources de liaison latérale (102) et/ou de la configuration de ressources de liaison latérale (103) pour réaliser une transmission en liaison latérale ; et
envoyer le second seuil (301) au ou aux UE (120, 130) et/ou à l'entité de réseau (100).

10. Procédé (900) pour une entité de réseau (100), le procédé (900) comprenant :
la détermination (901) d'un premier seuil (101) indiquant la fin d'utilisation (T1), par un ou plusieurs Équipements Utilisateurs, UE (110, 120, 130), d'une ou plusieurs ressources de liaison latérale (102) et/ou d'une configuration de ressources de liaison latérale (103), pour réaliser une transmission en liaison latérale, sur la base d'une valeur de probabilité d'une interruption de liaison ; et
l'envoi (902) du premier seuil (101) et de la ou des ressources de liaison latérale (102) et/ou de la configuration de ressources de liaison latérale (103) au ou aux UE (110, 120, 130).

11. Procédé (1000) pour UE (110), le procédé (1000) comprenant :
la détermination (1001) d'une ou plusieurs ressources de liaison latérale (102) et/ou d'une configuration de ressources de liaison latérale (103) pour un ou plusieurs UE (120, 130) pour réaliser une transmission en liaison latérale ;
la détermination d'un premier seuil (101) indiquant la fin d'utilisation (T1), par le ou les UE (120, 130), de la ou des ressources de liaison latérale (102) et/ou d'une configuration de ressources de liaison latérale (103) pour la transmission en liaison latérale, sur la base d'une valeur de probabilité d'une interruption de liaison ;
l'envoi (1002) de la ou des ressources de liaison latérale (102) et/ou de la configuration de ressources de liaison latérale (103) au ou aux UE (120, 130), à utiliser en cas d'interruption de liaison, et
l'envoi du premier seuil (T1) au ou aux UE (120, 130) et/ou à une entité de réseau (100).
